**Europäisches Patentamt**

**European Patent Office**

**Office européen des brevets**

(19)

(11) Veröffentlichungsnummer: **0 054 882**
**B1**

(12) # EUROPÄISCHE PATENTSCHRIFT

(45) Veröffentlichungstag der Patentschrift:
26.02.86

(21) Anmeldenummer: **81110434.8**

(22) Anmeldetag: **15.12.81**

(51) Int. Cl.⁴: **B 60 D 1/14,** B 62 D 53/04,
B 60 D 1/06

(54) Kupplungsverbindung zwischen einem Zugfahrzeug und einem Anhänger, vorzugsweise Einachsanhänger.

(30) Priorität: **19.12.80 DE 3048118**

(43) Veröffentlichungstag der Anmeldung:
**30.06.82 Patentblatt 82/26**

(45) Bekanntmachung des Hinweises auf die Patenterteilung:
**26.02.86 Patentblatt 86/9**

(84) Benannte Vertragsstaaten:
**AT BE DE FR GB IT NL SE**

(56) Entgegenhaltungen:
**DE - A - 1 941 745**
**DE - A - 2 242 886**
**DE - C - 410 289**
**DE - C - 695 898**
**DE - U - 8 005 600**
**FR - A - 2 178 497**
**FR - A - 2 350 977**
**US - A - 2 120 422**
**US - A - 3 556 558**
**US - A - 3 787 068**
**US - A - 3 790 191**
**US - A - 3 955 831**
**US - A - 4 019 754**
**US - A - 4 106 794**
**US - A - 4 266 800**
**US - A - 4 281 847**

(73) Patentinhaber: **Alois Kober KG, Maschinenfabrik,**
**Ichenhauserstrasse 14, D-8871 Kötz 2 (DE)**

(72) Erfinder: **Kober, Kurt, Am Sandberg 2,**
**D-8871 Kötz 1 (DE)**
Erfinder: **Wöhrle, Rudolf, Dipl.-Ing., Kirchstrasse 2,**
**D-8873 Ichenhausen-Rieden (DE)**
Erfinder: **Köhler, Robert, Ing. grad., Haus Nr. 126 b,**
**D-8871 Kemnat (DE)**
Erfinder: **Falkenheiner, Helmut, Beethovenstrasse 16,**
**D-8011 Vaterstetten (DE)**

(74) Vertreter: **Ernicke, Hans-Dieter, Dipl.-Ing.,**
**Schwibbogenplatz 2b, D-8900 Augsburg (DE)**

**Beschreibung**

Die Erfindung bezieht sich auf eine Kupplungsverbindung zwischen einem Zugfahrzeug und einem Anhänger, vorzugsweise Einachsanhänger, mit einer Anordnung zum Verlegen des effektiven Anlenkpunktes in Richtung zum Schwerpunkt des Zugfahrzeuges, bestehend aus zwei beidseitis der Gespannlängsachse angeordneten, das Zugfahrzeug mit dem Anhänger verbindenden und eine Viergelenkkette bildenden Lenkern, deren dem Zugfahrzeug zugeordneten Gelenke voneinander einen geringeren Abstand als derem dem Anhänger zugeordneten Gelenke aufweisen.

Solchen Kupplungsverbindungen liegt der Gedanke zugrunde, das Entstehen von Schwänzelbewegungen des Anhängers (gemeint ist damit eine oszillierende Drehbewegung des Anhängers um eine vertikale Achse) zu erschweren.

Die US—A—3 787 068 offenbart hierzu, zwei Deichselstangen an den beiden vorderen Rahmenecken des Anhängers zu lagern und deren andere Enden in einem solchen Abstand voneinander an Kugelgelenken des Zugfahrzeuges aufzunehmen, daß der Schnittpunkt der Deichselstangen-Verlängerungen noch vor der Hinterachse des Zugfahrzeuges nahe dessen Schwerpunktes zu liegen kommt.

Die US—A—4 106 794 offenbart die Anordnung von insgesamt vier solchen Diechselstangen, die paarweise mit Abstand übereinander angeordnet sind. Die Verlängerungen der Deichselstangen schneiden sich hierbei in der Hinterachsebene des Zugfahrzeuges.

Durch die US—A—4 019 754 ist es bekannt, verhältnismäßig kurze Deichselstangen in Form von Lenkern zwischen Querträgern anzuordnen und an ihnen kreuzgelenkartig zu lagern. Die Querträger sind ihrerseits mit starren Kupplungsstangen des Zugfahrzeuges und des Anhängers fest verbunden. Auch bei dieser Kupplungsverbindung sind insgesamt vier Lenker vorhanden, von denen jeweils die beiden übereinander liegenden Lenker ein Lenkerpaar bilden und gelenkig an vertikalen Stangen angeschlossen sind, die ihrerseits an den Querträgern um vertikale Achsen drehbar gelagert sind.

Der Nachteil dieser bekannten Kupplungsverbindungen besteht darin, daß Zugfahrzeuge und Anhänger spezielle ausgerüstet sein müssen, um die Lenker und deren Lagerungen aufzunehmen. Ganz abgesehen davon, daß die Zulassung solcher speziell ausgerüsteten Fahrzeuge erhebliche Schwierigkeiten bereitet, ist das Ankuppeln und Abkuppeln der Anhänger mit erheblichem Arbeitsaufwand und komplizierten Manipulationen verbunden, die den technisch nicht gebildeten Fahrzeugbesitzern kaum zuzumuten sind.

Der Erfindung liegt daher die Aufgabe zugrunde, eine Kupplungsverbindung der eingangs erwähnten Art so weiter zu entwickeln, daß es ermöglicht ist, Anhänger beliebiger Form an Zugfahrzeuge beliebiger Form ankuppeln zu können.

Ausgehend von der US—A 4 019 754 wird die gestellte Aufgabe erfindungsgemäß dadurch gelöst, daß die Lenker mit ihren Gelenken und mit zwei voneinander distanzierten, die Gelenke aufnehmenden Stegen zu einer Baugruppe vereinigt sind, bei welcher der dem Anhänger zugeordnete Steg im Rahmen bzw. Fahrgestell des Anhängers um eine in Fahrtrichtung sich erstreckende Achse schwenkbar gelagert und der dem Zugfahrzeug zugeordnete Steg am Zugfahrzeug gelenkig eingehängt und gegen Verdrehen um die vertikale, sich durch den Kupplungspunkt erstreckende Achse abgestützt ist.

Eine solche Ausgestaltung macht es möglich, den Anhänger in üblicher Weise am Kugelkopf des Zugfahrzeuges mit einer einzigen Kugelkopf-Kupplung zu verbinden. Dieses Gelenk nimmt Zug- und Druckkräfte, wie bei einem normalen Gespann, auf. Die Schwänzelbewegung oder sonstige Relativbewegungen von Zugfahrzeug und Anhänger werden jedoch über die am Steg des Anhängers befindlichen vier anderen Gelenke und Lenker übertragen. Damit der erfindungsgemäße Zweck erreicht wird, ist jedoch der dem Zugfahrzeug zugeordnete Steg gegenüber ortsfesten Bauteilen des Zugfahrzeuges abgestützt, so daß über diese Abstützungen die erwünschte Verlegung des effektiven Kupplungspunktes ermöglicht wird. Solche Abstützungen sollen miteinander zur Wirkung kommen, wenn die Kupplungsverbindung hergestellt wird. Es handelt sich also um ineinandergleitende, sich gegeinander abstützende Führungen, welche den Zweck haben, die beiden, dem Zugfahrzeug zugeordneten Gelenke so wirken zu lassen, als seien deren Gelenkköpfe ortsfest am Zugfahrzeug angeordnet.

Mit einer solchen Maßnahme lassen sich vorhandene Anhänger kostengünstig ausrüsten, ohne daß die Kugelkopfkupplung des Zugfahrzeuges geändert zu werden braucht. Es ist lediglich erforderlich, dort die entsprechenden Abstützelemente anzuschließen.

Die erfindungsgemäß Anordnung ermöglicht auch den Einsatz üblicher Auflaufbremseinrichtungen für den Anhänger. Zu diesem Zweck ist der dem Anhänger zugeordnete Steg erfindungsgemäß axial verschiebbar im Anhängerrahmen geführt.

Der dem Zugfahrzeug zugeordnete Steg weist ein Kupplungsgehäuse zum üblichen Aufsetzen auf einen normale Kugelkopfkupplung des Zugfahrzeuges auf.

Das Einhängen der erfindungsgemäßen Baugruppe an der normalen Kulgekopfkupplung des Zugfahrzeuges kann aber auch noch auf andere Weise hinsichtlich des notwendigen Abstützens gegen Verdrehen um die vertikale Achse des Kugelkopfes herbeigeführt werden. Hierzu empfiehlt es sich, den dem Zugfahrzeug zugeordneten Steg mit einem Auslege zu versehen, der gegenüber einer Stelle des Zugfahrzeuges gelenkig abgestützt ist, wobei die Gelenkachse horizontal und quer zur Gespannlängsachse durch das Zentrum des Kugelkopfes verläuft. Diese Maßnahme geht von der Grundkonzeption aus, die Deichsel des Anhängers in üblicher Weise mit einer Kugelkopfkupplung am Zugfahrzeug einzuhängen und dann den die Kupplung enthaltenden Träger gegenüber dem Zugfahrzeug so abzustützen, daß eine gelenkige Beweglichkeit entlang der durch die Kugel gehenden horizontalen Achse gewahrt bleibt.

Zur Ausbildung dieser gelenkigen Abstützung bieten sich zahlreiche Möglichkeiten an, beispielsweise dadurch, daß das Auslegergelenk durch das Lager eines Hebels gebildet ist, der an einer Anhägeöse des Zugfahrzeuges festgespannt ist. Es ist auch vorteilhaft, wenn das Auslegergelenk an einem ortsfest mit dem Zugfahrzeug bzw. dessen Rahmen verbundenen Ansatz angeordnet und von einer Kugelkopfkupplung gebildet ist. Solche und andere Maßnahmen setzen allerdings bautechnische Maßnahmen am Zugfahrzeug voraus.

Man kann aber eine erfindungsgemäße Kupplungsverbindung auch so ausbilden, daß am Zugfahrzeug keine bautechnischen Veränderungen vorzunehmen sind. In diesem Falle empfiehlt es sich beispielsweise, den einzelnen Ausleger im Träger um die Gelenkachse drehbar zu lagern, die durch den Kugelkopf horizontal verläuft, und den Ausleger mit Spannelementen zu verbinden, die sich am Zugfahrzeug ortsfest abstützen. Solche Spannelemente können beispielsweise um vertikale Achsen schwenkbar gelagerte Spannhebel sein, die sich mit ihrem freien Ende an der Stoßstange des Zugfahrzeuges oder deren Befestigungselementen abstützen und über eine Arretierung gegenüber dem Ausleger blockiert sind. Dabei wird es sich empfehlen, den Spannhebel mittels eines weichen Polsters an der Außenseite der Stoßstange angreifen zu lassen. Die Arretierung des Spannhebels kann beispielsweise durch ein ratschenartig ausgestaltetes Gelenk entlang der vertikalen Achse gebildet sein. Man kann aber auch den Ausleger oder/und den Spannhebel mit einer Spindel versehen, deren Spindelteller sich mittels eines weichen Polsters an der Stoßstange des Zugfahrzeuges abstützt.

In jedem Falle ist dafür Sorge getragen, daß der Träger keine um die Fahrzeuglängsachse verlaufende Drehbewegung ausführen, aber die Nickbewegung um die horizontale Achse nicht verhinde kann.

Bisher wurde in den Ausführungsbeispielen von nahezu symmetrischen Gelenkanordnungen, bezogen auf die Fahrzeuglängsachse, ausgegangen. In einem weiteren Ausführungsbeispiel der Erfindung ist eine asymmetrische Anordnung gezeigt, wonach die Zugstange des Anhängers einen starr mit ihr verbundenen und sich quer zur Längsachse erstreckenden Ausleger aufweist, welche die beiden anhängerseitigen Gelenke in der Längsachse und am Ende des Auslegers enthalten, wobei in Verlängerung der Zugstange ein die Kugelkopfkupplung enthaltender Hauptlenker mit ihr verbunden ist und wobei ferner am Gelenk des Auslegers ein Hilfslenker angreift, der gelenkig mit einem zweiten Abstützpunkt des Zugfahrzeuges unter Bildung der Viergelenkkette verbunden ist.

Bei dieser Ausführungsform überträgt der Hauptlenker im wesentlichen die Stützkräfte, die sich als Zug- und Druckkräfte äußern. Der Hilfslenker überträgt im wesentlichen die Steuerkräfte, die bei Kurvenfahrten auftreten und ebenfalls den Hilfslenker auf Zug und Druck belasten.

Einzelheiten der Erfindung sind in der Zeichnung schematisch und beispielsweise dargestellt. Es zeigen:

Fig. 1: eine Draufsicht auf ein Zugfahrzeug mit Anhänger und eine Kupplung, bei der alle Gelenkpunkte in einem mit dem Anhänger verbundenen Steg vereinigt sind,

Fig. 2 u. 3: Draufsicht und Seitenansicht einer mit dem Zugfahrzeug verbundenen Abstützvorrichtung,

Fig. 4 u. 5: Draufsicht und Seitenansicht eines mit dem Anhänger verbundenen, abzustützenden Steges,

Fig. 6 bis 9: Draufsichten und Seitenansichten von zwei Ausführungsvarianten, bei denen ein die Kugelkopfkupplung tragender Träger über einen Ausleger am Zugfahrzeug gelenkig abgestützt ist,

Fig. 10 bis 12: Draufsichten und eine Seitenansicht von zwei Ausführungsvarianten, bei denen der Ausleger im Träger drehbar gelagert ist und

Fig. 13: eine Draufsicht auf eine asymmetrische Viergelenk-Anordnung mit einem an der Zugstange des Anhängers befestigten Ausleger.

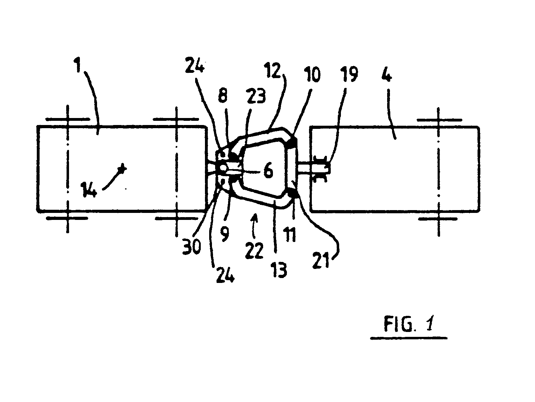

Die in Fig. 1 dargestellte Kupplungsverbindung ist in vier Gelenke 8, 9, 10, 11 aufgelöst, von denen die Gelenke 8, 9 das eine Gelenkpaar und die Gelenke 10, 11 das andere Gelenkpaar bilden. Das Gelenkpaar 8, 9 ist über den Steg 30 mit dem Zugfahrzeug 1 verbunden. Das andere Gelenkpaar 10, 11 ist über einen Steg 21 am Anhänger 4 angeordnet. Der Abstand der Gelenke 8 und 9 ist keliner als der Abstand der Gelenke 10, 11. Die Gelenke 8, 10 sind über einen Lenker 12, die Gelenke 9, 11 über einen Lenker 13 miteinander verbunden. Durch die Lenker 12, 13 und die Gelenke 8 bis 11 wird eine Viergelenkkette gebildet. Der Schnittpunkt der Verlängerungen der Lenker ist der effektive Kupplungspunkt. Er liegt dem Schwerpunkt 14 des Zugfahrzeuges 1 wesentlich näher als der Ort der üblichen Kupplung. Infolgedessen sind die von der Bewegung des Anhängers 4 herrührenden dynamischen Kräfte vom Zugfahrzeug 1 wesentlich leichter mit der Anordnung gem. Fig. 1 gegenüber eine herkömmlichen Anordnung aufzufangen. Andererseits ergibt sich, daß zufolge der Viergelenkkette 8 bis 11 eine Ausweichmöglichkeit gegeben ist, durch die das Fahrverhalten des Zugfahrzeuges 1, selbst bei ungünstigen Bodenverhältnissen und hohen Geswindigkeiten, nicht ohne weiteres auf den Anhänger 4 übertragen wird, weil durch die gelenkige Ausweichung der Lenker 12, 13 ein nicht unwesentlicher Teil dieser Beeinflussung aufgefangen wird.

Im Ausführungsbeispiel der Fig. 1 ist schematisch dargestellt, daß alle vier Gelenke 8 bis 11 in einer gemeinsamen Baugruppe 22 angeordnet sind, die mit dem Anhänger 4 verbunden, insbesondere über die Schwenkachse 19 relativ verdrehbar ist. In dieser Baugruppe 22 ist ein Kupplungsgehäuse 23 angeordnet, das demjenigen der verkehrsüblichen Gespannkupplungen entspricht und mit der Kugelkopfkupplung 6 des üblich ausgerüsteten Zugfahrzeuges 1 verbindbar ist. Damit aber die Wirkung der Erfindung erzeugbar ist, muß diese Baugruppe 22 erfindungsgemäß ausgebildet sein. Sie weist einen dem Anhänger 4 zugeordneten Steg 21 sowie einen dem Zugfahrzeug 1 zugeordneten Steg 30 auf, die miteinander über die Gelenke 8 bis 11 und die Lenker 12, 13 verbunden sind, wobei die Gelenke 8 bis 11 als um vertikale Achsen drehbare Lager ausgebildet sind, um die Sattellast des Anhängers 4 aufzunehmen.

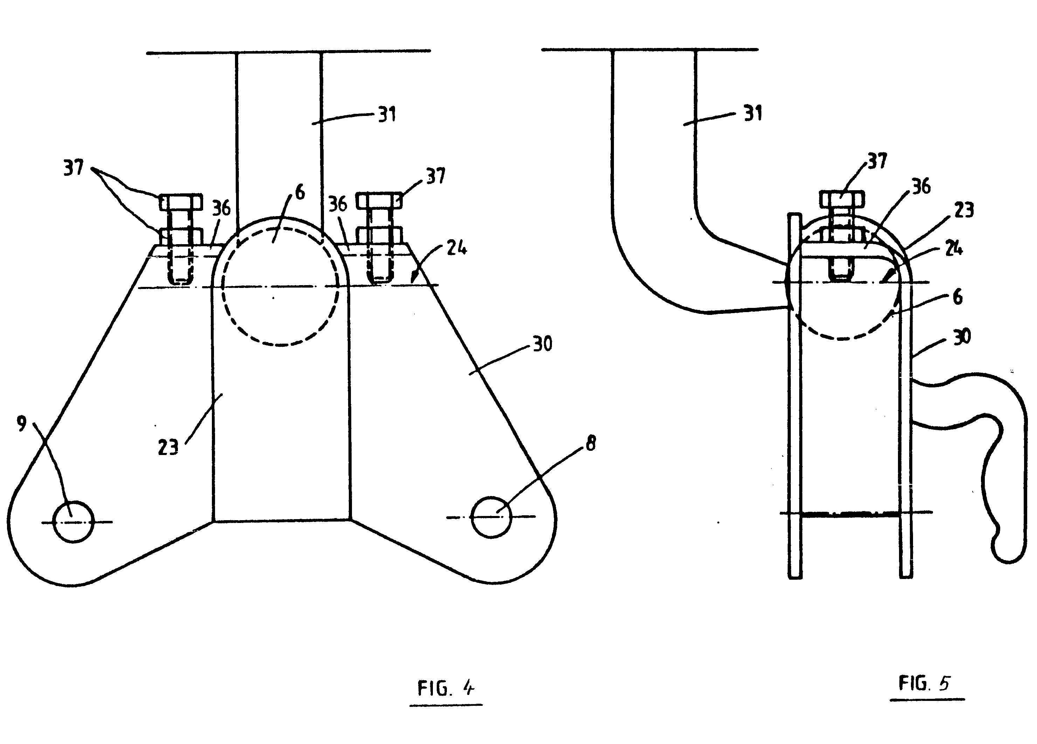

Der Steg 30 wird über Abstützungen 24 gegenüber dem Zugfahrzeug 1 geführt, weil ja die Gelenke 8, 9 über die Lenker 12, 13 und den Steg 21 mit dem Anhänger 4 verbunden sind. Diese Abstützungen 24, die in Ausführungsbeispielen in den Fig. 4 bis 7 dargestellt sind, sollen die Wirkungen über die Gelenke 8, 10 bzw. 9, 11 erzwingen, wie sie generell zu Fig. 1 dargestellt worden sind. Auf diese Weise wird das übl he Kupplungsgelenk 6 überbrückt, welches zwar die Zug- und Druckbelastungen bei Geradeausfahrt aufnimmt. Horizontales Ausknicken des Anhängers gegenüber dem Zugfahrzeug wird jedoch über die Abstützungen 24 vermieden, so daß auch in diesem Falle der effektive Kupplungspunkt 14 in Richtung zum Schwerpunkts des Zugfahrzeuges 1 verlegt ist.

Eine solche Anordnung gem. Fig. 1 bietet die Möglichkeit, einen Anhänger 4 mit einer erfindungsgemäßen Kupplungsverbindung auszurüsten und diese an ein Zugfahrzeug mit üblicher Kugelkopf-Kupplung anzuschließen, wobei dort lediglich die Abstützungen 24 zusätzlich anzubringen sind.

Bei einer solchen Anordnung nach Fig. 1 sind die zwischen dem Zugfahrzeug 1 und dem Anhänger 4 erforderlichen Freiheitsgrade in Bezug auf Kurvenfahrt und Tal- und Bergfahrt gegeben, wenn davon ausgegangen wird, daß die Gelenke 8 und 9 Kugelgelenke sind. Die Gelenke 10, 11 sollten hingegen als um vertikale Achsen drehbare Lager ausgebildet sein, um die Sattellast der Anhängerdeichsel auf das Zugfahrzeug 1 übertragen zu können.

Zufolge der Viergelenkkette 8—11 ist aber kein Freiheitsgrad gegeben, um eine Verwindung von Anhänger 4 und Zugfahrzeug 1 um die Längsachse des Gespannes zu ermöglichen. Aus diesem Grunde ist beim Ausführungsbeispiel der Fig. 1 vorgesehen, daß der Steg 21 für die Gelenke 10, 11 um die Längsachse des Anhängers 4 relativ verdrehbar ist, was durch die Schwenkachse 19 symbolisch dargestellt ist. Der Anhänger 4 kann sich also um diese Schwenkachse 19 aufgrund unebener Fahrbahn relativ zum Zugfahrzeug 1 verdrehen, ohne daß die Gelenke 8—11 belastet werden.

In diesem Zusammenhang sei auf die Anordnung der verkehrsüblichen Auflaufbremse hingewiesen. Bei vorbekannten Anordnungen ist im Bereiche der Kupplung eine in Längsachsenrichtung zur Zuggabel bzw. Deichsel relativ bewegliche Zugstange vorgesehen, deren Relativbewegung zur Bewegung des Anhängers die Wirkung der Auflaufbremse indiziert. Diese Relativbewegung läßt sich beim Ausführungsbeispiel der Fig. 1 in den Bereich der Schwenkachse 19 verlegen, so daß es ohne weiteres möglich ist, eine dem Anhänger nähergelegene Auflaufbremse anzuordnen, ohne daß diese durch die Viergelenkkette 8 bis 13 gestört wird.

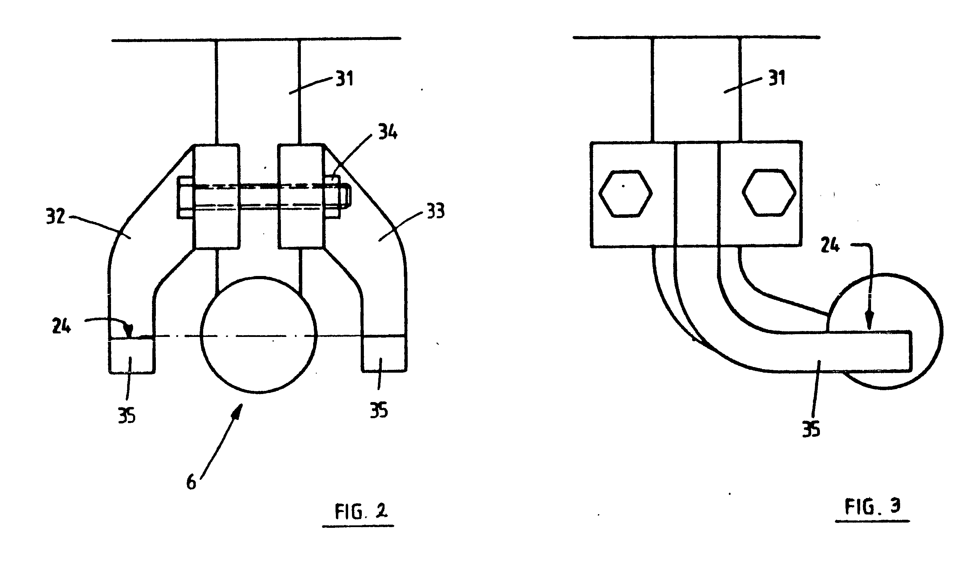

Gem. Fig. 2 und 3 sind am Kupplungshals 31 einer normalen Kugelkopfkupplung 6 zwei Spannbacken 32, 33 mit Schrauben festgeklemmt, die in einen aufrechten Ansatz 35 mit einer die Abstützung 24 bildenden Anschlagfläche übergeben, deren Vertikalebene den Mittelpunkt der Kupplungsbügel (6) schneidet.

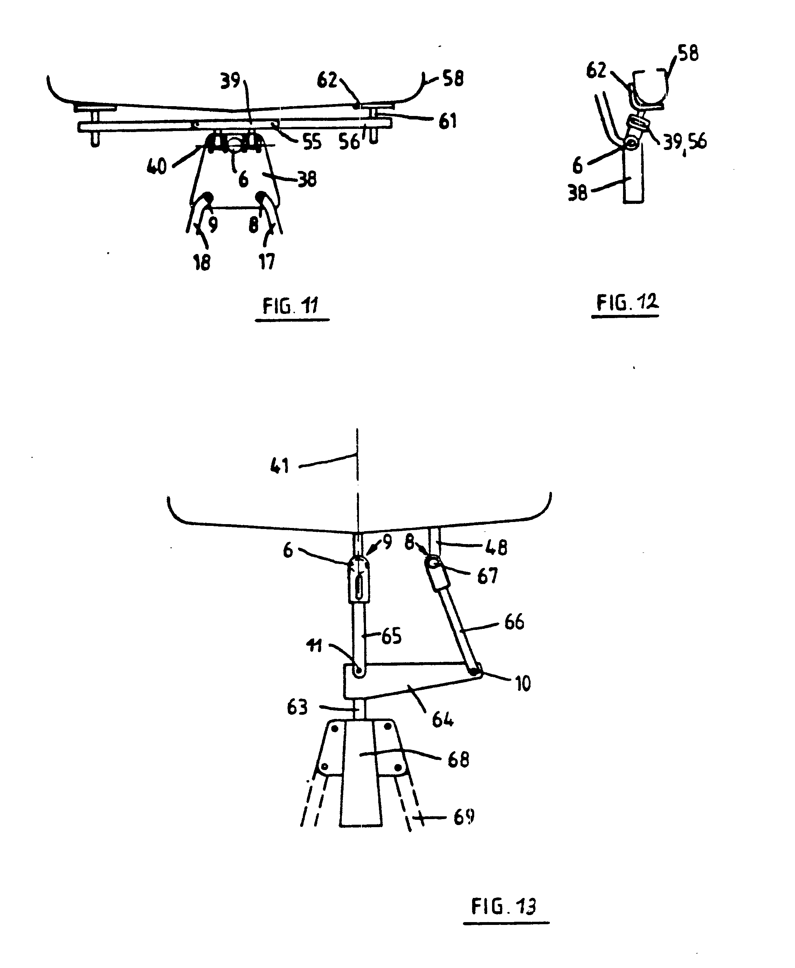

Der in den Fig. 4 und 9 dargestellte mit dem Anhänger verbundene Steg 30 weist eine dem Zugfahrzeug zugekehrte Stirnwand 36 auf, in der Anschlagschrauben 37 einstellbar und feststellbar geführt sind, deren Stirnseiten gegen die Anschlagfläche der Abstützung 24 wirken. An den Gelenken 8, 9 sind die nicht dargestellten Lenker (12, 13, Fig. 1) angelenkt.

Die Abstützung 24 bildet sich also automatisch beim Aufsetzen des Steges 30 mit dem lediglich symbolisch dargestellten Kupplungsgehäuse 23 auf die Kugel 6. Sie verhindert eine horizontale Relativbewegung des Anhängers und des Zugfahrzeuges um die durch die Kugel 6 verlaufende Schwenkbewegung. Die effektive Schwenkbewegung findet vielmehr um den sich aus dem Schnittpunkt der durch die Gelenke 8, 10 und 9, 11 verlaufenden Geraden ergebenden, dem Schwerpunkt näher liegenden Kupplungspunkt 14.

Es liegt auf der Hand, daß solche Abstützungen 24 auch in konstruktiv anderer Weise ausgeführt werden können. Wesentlich ist, daß diese Abstützungen 24 eine sogenannte Nickbewegung des Zugfahrzeuges gegenüber dem Anhänger in einer durch die Kugel 6 gehenden Vertikalebene zulassen sollen, weshalb beim Ausführungsbeispiel die Anschlagschrauben 37 in der durch die Kugelmitte 6 verlaufenden Horizontalebene wirken.

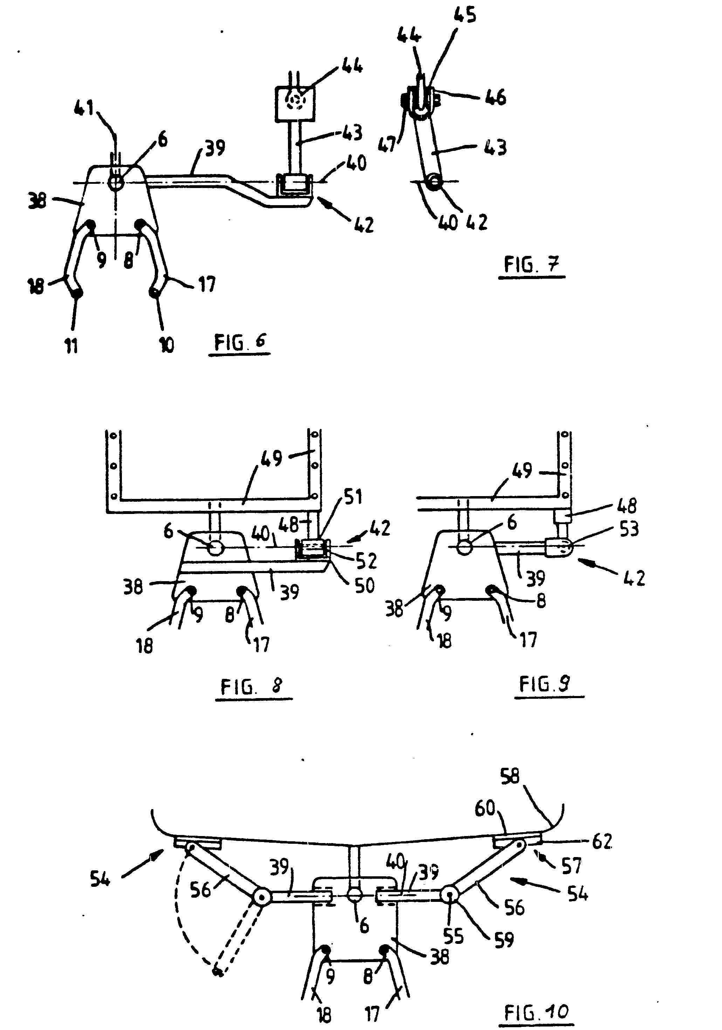

Beim Ausführungsbeispiel der Fig. 6 und 7 ist ein Träger 38 vorgesehen, der eine übliche Kugelkopf-Kupplung 6 trägt, mit welcher der Träger 38 am Kugelteil des Zugfahrzeuges eingekuppelt werden kann. Dieser Träger 38 weist außerdem die dem Zugfahrzeug zugekehrten Gelenke 8, 9 auf.

Dieser Träger 38 besitzt nun einen seitlich vorkragenden und mit ihm ortsfest verbundenen Ausleger 39, an dessen freiem Ende sich ein Gelenk 42 befindet, dessen Gelenkachse 40 sich horizontal und quer zur Gespannlängsachse 41 erstreckt sowie durch das Zentrum der Kugel 6 verläuft. Das Gelenk 42 wird außerdem durch das Auge eines Hebels 43 gebildet, der mit einer verkehrsüblicherweise am Zugfahrzeug befestigten Anhängeöse 44 verbunden ist. Zu diesem Zweck ist im Beispiel der Fig. 7 vorgeschlagen, beidseits der Anhängeöse 44 elastische Einlagen 45 vorzusehen und die Anhängeöse 44 von einem Gabelschenkel 46 umgreifen zu lassen, so daß eine geeignete Verschraubung 47 angebracht werden kann. Diese hat den Sinn, den Hebel 43 so zu halten, daß der Ausleger 39 zwar um die Achse 40 eine Bewegung des Trägers 38 zuläßt, nicht aber eine Schwenkbewegung um die Gespannlängsachse 41.

Eine ähnliche Konstruktion ergibt sich aus den Fig. 8 und 9, wonach der Ausleger 39 des Trägers 38 ein Gelenk 42 zwischen einem ortsfest am Rahmen 49 des Zugfahrzeuges angeordneten Ansatz 48 bildet. Dieses Gelenk 42 ist beispielsweise durch eine Gabel 50 des Auslegers 39, durch ein Auge 51 des starren Ansatzes 48 und durch einen Lagerzapfen 52 gebildet, wobei wiederum die Längsachse des Lagerzapfens 52 durch das Zentrum der Kugelkopfkupplung 6 verläuft.

Beim Beispiel der Fig. 9 wird das Gelenk 42 durch eine besondere Kugelkopfkupplung 53 gebildet, deren Gehäuseteil am Ausleger 39 befestigt ist, und zwar zusammen mit dem Betätigungshebel, und deren Kugel Bestandteil des starren Ansatzes 48 ist.

Die vorerwähnten Ausführungsvarianten der Fig. 6 bis 9 setzen voraus, daß am Zugfahrzeug Bauteile vorhanden sind, an denen der Ausleger 39 abgestützt werden kann. Um aber die erfindungsgemäße Kupplungsverbindung universeller und unabhängig von der einzelnen Bauform des Zugfahrzeuges zu machen, ist in den Fig. 11 bis 13 davon ausgegangen, daß der einzelne Ausleger 39 um die Gelenkachse 40, die horizontal durch die Kugel 6 verläuft, schwenkbar am Träger 38 gelagert ist. An den beiden Enden des Auslegers 39 sind Spannhebel 56 schwenkbar gelagert, und zwar um vertikale Achsen 55. Im Beispiel der Fig. 11 weist jeder einzelne Spannhebel 56 eine Spindel 61 auf, die sich mit einem stark gepolsterten Spindelteller 62 an der rückwärtigen Stoßstange 58 des Zugfahrzeuges abstützt. Da die Kugel der Kugelkopfkupplung 6 regelmäßig tiefer als die Stoßstange 58 liegt, ergibt sich eine schräge Anordnung des Auslegers 39 oder/und des Spannhebels 56. Die vertikale Schwenkachse 55 ist dazu da, den Spindelteller 22 in geeigneter Weise an die Stoßstange 58 anschwenken zu lassen. Wird aber die Spindel 61 betätgit, dann sollte das Gelenk 55 arretiert sein.

In Fig. 10 ergibt sich eine Variante, wonach mit dem Träger 38 zwei Ausleger 39 um die horizontale Achse 40 drehbar gelagert sind. Am Ende der Ausleger 39 befindet sich wiederum das Gelenk mit der vertikalen Achse 55, das einen Spannhebel 56 trägt. Mit 59 ist schematisch eine Arretierung dargestellt, welche beispielsweise als Zahn- oder Reibscheibe ausgebildet sein kann und ratschenähnlich oder klemmend wirkt. Wesentlich ist auch hier, daß der Spannhebel 56 in die zur Stoßstange 58 günstigste Stellung gebracht werden kann, wobei am freien Ende 57 des Spannhebels 56 wiederum ein Teller 62 mit einem weichen Polster 60 vorgesehen sind, die ebenfalls schwenkbar am Spannhebl 56 gelagert sein können.

Wichtig ist bei den vorgenannten Ausführungsbeispielen lediglich der Umstand, daß die Spannhebel 56 und Ausleger 39 den Träger 38 in der Waage halten und ihm nur eine Drehbewegung um die horizontale Achse 40 erlauben.

In Fig. 13 ist schließlich eine asymmetrische Gelenkanordnung gezeigt. Danach weist die Zugstange 63 des Anhängers, die in einem Zuggabelgehäuse 68 in üblicher Weise längsverschiebbar gelagert ist, einen Ausleger 64 auf, der sich einseitig aus der Gespannlängsachse 41 wegerstreckt und start mit der Zugstange 63 verbunden ist. Das Zuggabelgehäuse 68 ist in üblicher Weise mit Deichselholmen 69 versehen. Am vorderen Ende der Zugstange 63 befindet sich das eine Gelenk 11, an das sich ein Hauptlenker 65 anschließt, der die Kugelkopfkupplung 6 trägt und mit der normalen Anhängerkupplung des Zugfahrzeuges das Gelenk 9 bildet. In der Geradeausfahrt-Stellung erstreckt sich der Hauptlenker 65 in der Fahrzeuglängsachse 41. Am freien Ende des Auslegers 64 ist das Gelenk 10 vorgesehen, von dem ein Hilfslenker 66 ausgeht, das mit einem Abstützelement 67 und einem entsprenden Gegenteil eines ortsfesten Ansatzes 48 des Zugfahrzeuges das vierte Gelenk 8 bildet. Das Abstützelement 67 kann wiederum als Kugelkopf-Kupplung ausgebildet sein.

Auch diese Anordnung gem. Fig. 13 stellt eine vollkommene Lösung der erfindungsgemäßen Aufgabe dar, die darüber hinaus den Vorteil der besonderen Einfachheit besitzt. Die Zug- und Druckkräfte bei Brems- und Beschleunigungs-Vorgängen werden fast ausschließlich während der Geradefahrt durch den Hauptlenker 65 aufgenommen, wohingegen der Hilfslenker 66 im wesentlichen zusätzlich belastet wird, wenn Steuerkräfte übertragen werden müssen, nämlich bei Kurvenfahrt.

**Patentansprüche**

1. Kupplungsverbirdung zwischen einem Zugfahrzeug (1) und einem Anhänger (4), vorzugsweise E nachsanhänger, mit einer Anordnung zum Verlegen des effektiven Anlenkpunktes in Richtung zum Schwerpunkt (14) des Zugfahrzeuges, bestehend aus zwei beidseits der Gespannlängsachse angeordneten, das Zugfahrzeug mit dem Anhänger verbindenden und eine Viergelenkkette bildenden Lenkern (12, 13), deren dem Zugfahrzeug zugeordneten Gelenke (8, 9) voneinander einen geringeren Abstand als deren dem Anhänger zugeordneten Gelenke (10, 11) aufweisen, dadurch gekennzeichnet, daß die Lenker (12, 13) mit ihren Gelenken (8, 9, 10, 11) und mit zwei voneinander distanzierten, die Gelenke (8, 9, 10, 11) aufnehmenden Stegen (21, 30) zu einer Baugruppe vereinigt sind, bei welcher der dem Anhänger zugeorndete Steg (21) im Rahmen bzw. Fahrgestell des Anhängers um eine in Fahrtrichtung sich erstreckende Achse schwenkbar gelagert und der dem Zugfahrzeug zugeordnete Steg (30, 38) am Zugfahrzeug gelenkig eingehängt und gegen Verdrehen um die vertikale, sich durch den Kupplungspunkt (6) erstreckende Achse abgestützt ist.

2. Kupplungsverbindung nach Anspruch 1, dadurch gekennzeichnet, daß der dem Anhänger zugeordnete Steg (21) im Rahmen des Anhängers axial verschiebbar geführt und mit einer Auflaufbremseinrichtung verbunden ist.

3. Kupplungsverbindung nach Anspruch 1, dadurch gekennzeichnet, daß der dem Zugfahrzeug zugeordnete Steg (30) ein Kupplungsgehäuse (23) zum üblichen Aufsetzen auf eine normale Kugelkopfkupplung (6) des Zugfahrzeuges aufweist.

4. Kupplungsverbindung nach Anspruch 1 oder folgenden, dadurch gekennzeichnet, daß an dem Kupplungshals (31) der Kugelkopfkupplung (6) zwei mit einem vertikalen Ansatz (35) versehene Spannbacken (32, 33) befestigt sind, wobei die eine Stirnseite des Ansatzes als Anschlagfläche der Abstützung (24) vorgesehen ist und in einer den Mittelpunkt der Kupplungsbügel (6) schneidenden Vertikaleben liegt, und daß am zugeordneten Steg (30) der mit dem Anhänger verbundenen Baugruppe (22) je eine parallel zur Anschlagfläche liegenden Stirnwand (36) mit darin verstellbar und feststellbaren angeordneten, gegen die Anschlagfläche wirkenden Schrauben (37) vorgesehen sind.

5. Kupplungsverbindung nach Anspruch 4, dadurch gekennzeichnet, daß die Schrauben (37) in der durch die Mitte der Kupplungskugel (6) verlaufenden Horizontalebene angeordnet sind.

6. Kupplungsverbindung nach Anspruch 1 oder einem der folgenden, dadurch gekennzeichnet, daß der dem Zugfahrzeug zugeordete Steg (30, 38) einen Ausleger (39) aufweist, der gegenüber einer Stelle des Zugfahrzeuges gelenkig abgestützt ist, wobei die Gelenkachse (40) horizontal und quer zur Gespannlängsachse (41) durch das Zentrum des Kugelkopfes (6) verläuft.

7. Kupplungsverbindung nach Anspruch 6, dadurch gekennzeichnet, daß das Auslegergelenk (42) durch das Lager eines Hebels (43) gebildet ist, der an einer Anhängeöse (44) des Zugfahrzeuges (1) festgespannt ist.

8. Kupplungsverbindung nach Anspruch 6, dadurch gekennzeichnet, daß das Auslegergelenk (42) an einem ortsfest mit dem Zugfahrzeug (1) bzw. dessen Rahmen verbundenen Ansatz (48) angeordnet ist.

9. Kupplungsverbindung nach Anspruch 7, dadurch gekennzeichnet, daß das Auslegergelenk (42) von einer Kugelkopfkupplung (53) gebildet ist.

10. Kupplungsverbindung nach Anspruch 6, dadurch gekennzeichnet, daß der einzelne Ausleger (39) im Steg (30, 38) um die Gelenkachse (40) drehbar gelagert und mit Spannelementen (54) verbunden sind, die sich am Zugfahrzeug (1) ortsfest abstützen.

11. Kupplungsverbindung nach Anspruch 6, dadurch gekennzeichnet, daß das einzelne Spannelement (54) aus einem am Ausleger (39) um eine etwa vertikale Achse (55) schwenkbar gelagerten Spannhebel (56) besteht, der sich mit seinem freien Ende (57) an der Stoßstange (58) des Zugfahrzeuges (1) oder deren Befestigungselementen abstützt und über eine Arretierung (59) gegenüber dem Ausleger (39) blockiert ist.

12. Kupplungsverbindung nach Anspruch 7, dadurch gekennzeichnet, daß der Spannhebel (56) mittels eines weichen Polsters (60) an der Außenseite der Stoßstange (58) angreift und daß die Arretierung (59) des Spannhebels durch ein ratschenartig ausgestaltetes Gelenk entlang der vertikalen Achse (55) gebildet ist.

13. Kupplungsverbindung nach Anspruch 7, dadurch gekennzeichnet, daß der Ausleger (39) oder/und Spannhebel (56) mit einer Spindel (61) versehen ist, deren Spindelteller (62) sich mittels eines weichen Polsters (60) an der Stoßstange (58) abstützt.

14. Kupplungsverbindung nach Anspruch 1 oder einem der folgenden, dadurch gekennzeichnet, daß die Zugstange (63) des Anhängers (4) einen starr mit ihr verbundenen und sich quer zur Längsachse (41) erstreckenden Ausleger (64) aufweist, welche die beiden anhängerseitigen Gelenke (11, 10) in der Längsachse (41) und am Ende des Auslegers (64) enthalten, und daß in Verlängerung der Zugstange (63) ein die Kugelkopfkupplung (6) enthaltender Hauptlenker (65) mit ihr verbunden ist und daß am Gelenk (8) des Auslegers (64) ein Hilfslenker (66) angreift, der gelenkig mit einem zweiten Abstützpunkt (67) des Zugfahrzeuges (1) unter Bildung der Viegelenkkette verbunden ist.

**Revendications**

1. Attelage entre un véhicule tracteur (1) et une remorque (4), de préférence une remorque à essieu unique, comportant un dispositif servant à décaler le point effectif d'articulation en direction du centre de gravité (14) du véhicule tracteur, cet attelage étant constitué par deux bras articulés (12, 13) disposés des deux côtés de l'axe longitudinal de l'ensemble véhicule-tracteur-remorque et reliant le véhicule tracteur à la remorque et constituant une chaîne à quatre articulations et dont les articulations (8, 9), qui sont associées au véhicule tracteur, sont à une distance réciproque plus faible que les articulations (10, 11) associées à la remorque, caractérisé par le fait que les bras articulés (12, 13) ainsi que leurs articulations (8, 9, 10, 11) et deux plaques (21, 30), qui sont distantes l'une de l'autre et reçoivent les articulations (8, 9, 10, 11), sont réunis sous la forme d'un module, dans lequel la plaque (21) associée à la remorque est montée sur le cadre ou le chassis de la remorque de manière à pouvoir pivoter autour d'un axe s'étendant suivant la direction de déplacement et dans lequel la plaque (30, 38), qui est associée au véhicule tracteur, est accrochée à ce dernier par articulation et est bloquée contre toute rotation autour de l'axe vertical passant par le point d'accouplement (6).

2. Attelage suivant la revendication 1, caractérisé par le fait que la plaque (21) associée à la remorque est guidée de manière à être déplaçable axialement dans le cadre de la remorque et est reliée à un dispositif de freinage par inertie.

3. Attelage suivant la revendication 1, caractérisé par le fait que la plaque (30) associée au véhicule tracteur, comporte un carter d'accouplement (23) pour le montage usuel sur un attelage à boule normal (6) du véhicule tracteur.

4. Attelage suivant la revendication 1 ou les suivantes, caractérisé par le fait que deux mâchoires de serrage (32, 33), qui sont munies d'un appendice saillant vertical (35), sont fixées sur la cross d'attelage (31) de l'attelage à boule (6), une face frontale de la partie saillante étant prévue en tant que surface de butée du dispositif d'appui (24) et étant située dans un plan vertical passant par le centre de la boule d'attelage (6), et que sur la plaque associée (30) du module (22) relié à la remorque, des parois frontales respectives (36) disposées parallèlement à la surface de butée comportent des boulons (37) qui sont disposés de manière à pouvoir être déplacés et bloqués dans ces parois latérales et qui agissent sur la surface de butée.

5. Attelage suivant la revendication 4, caractérisé par le fait que les boulons (37) sont disposés dans le plan horizontal passant par le centre de la boule d'attelage (6).

6. Attelage suivant la revendication 1 ou l'une des suivantes, caractérisé par le fait que la plaque (30, 38), qui est associée au véhicule tracteur, comporte un bras en console (39) qui est soutenu par articulation au niveau d'un emplacement du véhicule tracteur, l'axe d'articulation (40) étant horizontal et transversal par rapport à l'axe longitudinal (41) de l'ensemble véhicule tracteur-remorque et passant par le centre de la tête en forme de boule (6).

7. Attelage suivant la revendication 6, caractérisé par le fait que l'articulation (42) du bras en console est formée par le support d'un levier (43), qui est bloqué par serrage sur un anneau d'accrochage (44) du véhicule tracteur (1).

8. Attelage suivant la revendication 6, caractérisé par le fait que l'articulation (42) du bras en console est disposée sur un appendice saillant (48) solidaire du véhicule tracteur (1) ou de son cadre.

9. Attelage suivant la revendication 7, caractérisé par le fait que l'articulation (42) du bras en console est formé par un attelage à boule (53).

10. Attelage suivant la revendication 6, caractérisé par le fait que le bras en console unique (39) est monté sur la plaque (30, 38) de manière à pouvoir tourner autour de l'axe d'articulation (40) et est relié à des organes de serrage (54) qui s'appuient en un point fixe sur le véhicule tracteur (1).

11. Attelage suivant la revendication 6, caractérisé par le fait que l'élément de serrage unique (54) est constitué par un levier de serrage (56) monté sur le bras en console (39) de manière à pouvoir pivoter autour d'un axe approximativement vertical (55) et qui prend appui par son extrémité libre (57) sur le pare-chocs (58) du véhicule tracteur (1) ou sur les éléments de fixation de ce dernier, et est bloqué par rapport au bras en console (39) par l'intermédiaire d'un dispositif de blocage (59).

12. Attelage suivant la revendication 7, caractérisé par le fait que le levier de serrage (56) attaque, au moyen d'un rembourrage mou (60), la face extérieure du pare-chocs (58) et que le dispositif de blocage (9) du levier de serrage est formé par une articulation réalisée en forme de cliquet, le long de l'axe vertical (55).

13. Attelage suivant la revendication 7, caractérisé par le fait que le bras en console (39) et/ou le levier de serrage (56) est muni d'une broche (61) dont la plaque (62) prend appui par l'intermédiaire d'un élément de rembourrage mou (60) contre le pare-chocs (58).

**Claims**

1. Coupling connection between a traction vehicle (1) and a trailer (4), preferably a two-wheel trailer, having an arrangement for displacing the effective coupling point in the direction towards the centre of gravity (14) of the traction vehicle, comprising two connection rods (12, 13) which are arranged on both sides of the longitudinal axis of the vehicle and trailer combination, which connect the traction vehicle to the trailer, which form a four-bar chain, and of which the joints (8, 9) associated with the traction vehicle are set at a shorter distance apart than the joints (10, 11) associated with the trailer, characterised in that the connection rods (12, 13) are combined with their joints (8, 9, 10, 11) and two crosspieces (21, 30), which are set apart and which receive the joints (8, 9, 10, 11), to form a sub-assembly, wherein the crosspiece (21) associated with the trailer is mounted in the frame or chassis of the trailer, so as to pivot about an axis extending in the direction of travel, and the crosspiece (30) associated with the traction vehicle is coupled to the traction vehicle in an articulated manner and is secured against rotation about the vertical axis which extends through the coupling point (6).

2. Coupling connection according to claim 1, characterised in that the crosspiece (21) associated with the trailer is guided in an axially displaceable manner within the frame of the trailer and is connected to an overrunning brake device.

3. Coupling connection according to claim 1, characterised in that the crosspiece (30) associated with the traction vehicle comprises a coupling housing (23), for conventional placing onto a normal ball end coupling (6) of the traction vehicle (6).

4. Coupling connection according to claim 1 or any one of the following, characterised in that two clamping jaws (32, 33) provided with a vertical extension (35) are secured to the coupling neck (31) of the ball end coupling (6), one face of the extension being provided as a stop face of the support (24) and lying in a vertical plane, which cuts through the central point of the coupling bar (6), and on the associated crosspiece (30) of the sub-assembly (22) connected to the trailer, a face (36) which lies parallel to the stop face is provided in each case, having screws (37) arranged so that they can be adjusted and secured within the face and which act against the stop face.

5. Coupling connection according to claim 4, characterised in that the screws (37) are arranged in the horizontal plane extending through the centre of the coupling ball (6).

6. Coupling connection according to claim 1 or any one of the following, characterised in that the crosspiece (30, 38) associated with the traction vehicle comprises an extension arm (39), which is supported in an articulated manner with respect to one point of the traction vehicle, the joint axis (40) extending horizontally and transversely with respect to the longitudinal axis of the vehicle and trailer combination (41) through the centre of the ball end (6).

7. Coupling connection according to claim 6, characterised in that the extension arm joint (42) is formed by the bearing of a lever (43), which is clamped in a hitching hook (44) of the traction vehicle (1).

8. Coupling connection according to claim 6, characterised in that the extension arm joint (42) is arranged on an extension (48), which is rigidly connected to the traction vehicle (1) or to the chassis thereof.

9. Coupling connection according to claim 7, characterised in that the extension arm joint (42) is formed by a ball end coupling (53).

10. Coupling connection according to claim 7, characterised in that the individual extension arms (39) are mounted in the crosspiece (30, 38), so as to pivot about the joint axis (40), and are connected to clamping elements (54), which are rigidly supported by the traction vehicle (1).

11. Coupling connection according to claim 6, characterised in that the individual clamping element (54) comprises a clamping lever (56), which is mounted on the extension arm (39), so as to pivot about an approximately vertical axis (55), which is supported at its free end (57) on the bumper (58) of the traction vehicle (1), or on the fastening elements thereof, and which is locked by means of a locking device (59) with respect to the extension arm (39).

12. Coupling connection according to claim 7, characterised in that the clamping lever (56) is attached via a soft pad (60) to the outside of the bumper (58), and the locking device (59) of the clamping lever is formed by a joint, formed in the manner of a ratchet, along the vertical axis (55).

13. Coupling connection according to claim 7, characterised in that the extension arm (39) or/and the clamping lever (56) is provided with a spindle (61), the spindle plate (62) of which is supported via a soft pad (60) on the bumper (58).

14. Coupling connection according to claim 1 or any one of the following, characterised in that the drawbar (63) of the trailer (4) comprises an extension arm (64) which is rigidly connected to the drawbar (63), which extends transversely to the longitudinal axis (41), and which comprises both trailer-side joints (11, 10) in the longitudinal axis (41) and at the end of the extension arm (64), and in the extension of the drawbar (63), a main connection rod (65) containing the ball end coupling (6) is connected to the drawbar (63), and an auxiliary connection rod (66) is attached to the joint (8) of the extension arm (64), and is connected in an articulated manner to a second support point (67) of the traction vehicle (1), thereby forming the four-bar chain.

FIG. 1

FIG. 2

FIG. 3

0 054 882

FIG. 4

FIG. 5

0 054 882

FIG. 7

FIG. 6

FIG. 8

FIG. 9

FIG. 10

FIG. 11

FIG. 12

FIG. 13

9